# EUROPÄISCHE PATENTSCHRIFT

(11) **EP 3 021 022 B1**
(45) Veröffentlichungstag und Bekanntmachung des Hinweises auf die Patenterteilung: **19.07.2017**
(21) Anmeldenummer: 15193371.0
(22) Anmeldetag: 06.11.2015
(51) Int. Cl.: F16K 31/163, F16K 31/44, F15B 15/02, B30B 1/10, B30B 1/04, B30B 1/00

(54) **BETÄTIGUNGSORGAN**
ACTIONING DEVICE
ORGANE D'ACTIONNEMENT

(30) Priorität: 12.11.2014 CH 17562014
(43) Veröffentlichungstag der Anmeldung: 18.05.2016
(73) Patentinhaber: Ervo Immobilien GmbH, 6714 Nüziders (AT)
(72) Erfinder: Willi, Erhard, 6714 Nüziders (AT)
(74) Vertreter: Riederer Hasler & Partner Patentanwälte AG

(56) Entgegenhaltungen:
- EP-A1- 2 878 870
- DE-A1- 1 942 677
- FR-A1- 2 144 799
- GB-A- 246 938
- GB-A- 382 119
- GB-A- 466 108
- US-A- 2 897 784
- US-A- 3 229 713

## Beschreibung

### Gebiet der Erfindung

Die Erfindung betrifft ein Betätigungsorgan zum Öffnen und Schliessen eines Verschlussteils einer Armatur gemäss Oberbegriff des Anspruchs 1 und die Verwendung des Betätigungsorgans gemäss Anspruch 15.

### Stand der Technik

Linearantriebe, beispielsweise einfachwirkende Pneumatikzylinder mit Federrückstellung, haben den gravierenden Nachteil, dass die Rückstellkraft der Feder zum Ende des Rücksteli-Weges hin abnehmend ist und demzufolge die Rückstellkraft am Ende dieses Weges am geringsten ist. Ein typischer Anwendungsfall derartiger Linearantriebe ist der Einsatz als Ventilantrieb an direkt linear angetriebenen Ventilen wie beispielsweise an Membranventilen oder Eckventilen. Insbesondere werden solche Antriebe aus Sicherheitsgründen eingesetzt, wenn beispielsweise das Ventil bei Energieausfall automatisch schliessen soll. Dabei sollte die Kraft am Ende des Federhubes (expandierte Feder) möglichst gross sein, um die Dichtung am Ventilsitz anzupressen und einem fallweise auftretenden Differenzdruck entgegen der Schliessrichtung standhalten zu können. Diese Anforderungen führen meist zu einer Überdimensionierung des Antriebes, da die Kraft, welche erforderlich ist, um das Ventil gegen die ansteigende Federkraft vollständig zu öffnen, um 30-40 % höher ist, als der geforderte Mindestanpressdrucks.

In der US 2009/0039303 ist ein elektromotorischer Ventilantrieb beschrieben, welcher die Stellkraft des Ventilantriebs durch einen Hebelmechanismus verstärkt und eine Rotationskraft in eine translatorische Kraft umwandelt. Der Hebelmechanismus basiert auf einem einseitigen Hebel, welcher eine Schubstange mit endständigem Ventilverschluss heben und senken kann. Am freien Hebelarm ist eine Art Pleuelstange gelenkig befestigt. Die Welle des Elektromotors ist mit einem Kurbelarm mit der Pleuelstange verbunden. Der Hebelmechanismus ist jedoch nur dazu geeignet eine rotatorische Bewegung in eine translatorische Bewegung zu transformieren. Ausserdem benötigt der einarmige Hebel viel Platz, da er für eine ausreichende Kraftentwicklung eine bestimmte Länge nicht unterschreiten darf.

In der US 2,897,784 ist eine Presse beschrieben, deren Presskraft durch eine Mehrzahl miteinander zusammenwirkender Gelenkhebel vervielfacht wird. Wesentlich ist bei einer Presse, dass während des Verschiebens des Stempels bis zu seiner Endstellung eine möglichst grosse Kraft erreicht wird, um ein Werkstück zu pressen. Die statische Haltekraft, welche bei einem Ventilantrieb zu der Verschlusskraft führt, ist bei einer Presse von untergeordneter Bedeutung, wenn sich der der Stempel einmal in seiner Pressposition befindet.

Ein an dem Kopf des Gehäuses befestigter Pfosten und der Stempel sind durch ein Hebelgelenkpaar gelenkig miteinander verbunden. An dem Gelenk welches das Gelenkpaar verbindet ist ein Abstützhebel angelenkt, welcher mit einem in Längsachse verschiebbaren Kolbens gelenkig verbunden ist. Die Gelenkhebel wirken nach dem Prinzip der Nürnberger Schere zusammen. Die Justierung der Pressekraft erfolgt am freien Ende des Stempels. Ferner verfügt die Presse über keinerlei weitere Kraftbegrenzer. Diese Justierung ist für einen Ventilantrieb undenkbar, da bei einem gattungsgemässen Ventil das freie Ende der Stellstange immer innerhalb des Gehäuses angeordnet sein muss, um die Dichtheit des Ventils zu erfüllen. Bei der vorgeschlagenen Justierung müsste das Ventil für die Justierung der Stellkraft vollständig zerlegt werden.

In der FR 2144 799 ist ein Stellantrieb mit einem mechanischen Kraftverstärker offenbart. Der Kraftverstärker kann ein Kniehebel-Mechanismus sein. Der vorgeschlagene Mechanismus besitzt jedoch keinen Totpunkt, in dem er blockiert wäre, noch ist der Mechanismus einstellbar.

Auch der in der GB 466,108 beschriebene Stellantrieb zeigt einen Hebelmechanismus. Der Hebelmechanismus befindet sich in der Verschlussstelung des Ventils in einer Position in welcher er einknicken kann.

In der GB 382,119 ist ein Abblaseventil gezeigt, welches selbsttätig durch eine vorgespannte Feder schliesst. Die Feder drückt beim Schliessen des Ventils auf einen Hebelmechanismus, welcher die Schliesskraft des Ventils verstärkt. Die Schliesskraft ist jedoch nicht einstellbar

### Aufgabe der Erfindung

Aus den Nachteilen des beschriebenen Stands der Technik resultiert die die vorliegende Erfindung initiierende Aufgabe, einen gattungsgemässen Linearantrieb weiterzuentwickeln, welcher zum Beispiel bei linear angetriebenen Ventilen die Verschlusskraft steigert und trotzdem eine ausreichende Stabilität beim Schliessen des Ventils und eine kompakte Bauweise des Linearantriebs gewährleistet ist.

### Beschreibung

Bei einem Stellantrieb gemäss dem Stand der Technik ist die Stellstange in eine Haltestange und eine Hubstange unterteilt, wobei die Haltestange im Wesentlichen unbeweglich an dem Gehäuse befestigt ist, die Haltestange, die Hubstange und das Verbindungselement über ein Getriebe verbunden sind und die Hubstange über das Getriebe durch den Antrieb betätigbar ist. Das Getriebe ermöglicht es, dass die auf das Verbindungselement (Kolben) wirkende Antriebskraft mechanisch verstärkt werden kann und die am Ende der Hubstange wirkende Stellkraft grösser ist als die Antriebskraft.

Erfindungsgemäss wird die Aufgabe bei einer Vorrichtung gemäss Oberbegriff des Anspruchs 1 dadurch gelöst, dass die Hubstange an der Haltestange geführt ist. Dadurch kann das Kippmoment der Hubstange eliminiert werden.

Besonders bevorzugt ist es, wenn die die Position der Haltestange relativ zu dem Gehäuse ausserhalb des Gehäuses einstellbar ist. Dieses technische Merkmal ermöglicht es, dass der Anpressdruck der Hubstange auf einen Verschlussteil einer Armatur besonders einfach einstellbar ist. Insbesondere muss das Gehäuse, beispielsweise ein Ventilgehäuse, nicht geöffnet werden, um eine Einstellung vorzunehmen.

In einem weiteren Ausführungsbeispiel der Erfindung ist die Haltestange an einem Stellzapfen befestigt, welcher relativ zu dem Gehäuse in Längsachsenrichtung der Haltestange verstellbar ist. Dadurch ist die Länge der Haltestange und in weiterer Folge die Länge der Hubstange durch einfaches Versschieben des Stellzapfens ermöglicht. Steht der Stellzapfen mit einem Gehäusegewinde in Verbindung, so lässt sich die Verstellung besonders fein dosiert durch Verdrehen in dem Gehäusegewinde bewerkstelligen. Besonders bevorzugt ist es, wenn die Führung der Hubstange an der Haltestange dadurch realisiert ist, dass die Haltestange als ein Halterohr ausgebildet ist, in welchem die Hubstange geführt ist. Dazu ist an der Hubstange eine Verlängerung ausgebildet, welche in jeder Position der Hubstange in das Halterohr ragt. Die Führung der Hubstange ist besonders platzsparend, wodurch der Stellantrieb äusserst kompakt ist.

Zweckmässigerweise ist das Getriebe dazu ausgebildet, die durch das Verbindungselement vorgegebene Kraftkomponente in weitere Kraftkomponente quer zur vorgegebenen Kraftkomponente zu zerlegen. Dadurch kann die vorgegebene Kraftkomponente nach dem Hebelgesetz verstärkt werden.

In einer besonders bevorzugten Ausführungsform ist das Getriebe aus einer Vielzahl von Gelenkgliedern aufgebaut. Der Aufbau benötigt lediglich wenigstens drei Gelenkglieder und ist überraschend einfach und effizient. Zu einer stabilen Umsetzung des Getriebes und aus Symmetriegründen hat es sich jedoch als vorteilhaft erwiesen, wenn 12 Gelenkglieder verwendet werden.

In einer weiteren bevorzugten Ausführungsform weist sowohl die Haltestange als auch die Hubstange ein erstes und zweites Ende auf und die Haltestange ist an ihrem zweiten Ende an dem Gehäuse befestigt. Dadurch kann das erste Ende der Haltestange für das Getriebe als ein fixer Abstützpunkt bzw. ein Widerlager wirken. Dadurch müssen sich die Gelenkglieder an anderen Orten bewegen und sind durch das erste Ende der Haltestange als Fixpunkt zwangsgeführt.

In einer weiteren bevorzugten Ausführungsform ist das erste Ende der Haltestange gelenkig mit einem ersten Gelenkglied verbunden, ist das zweite Ende der Hubstange gelenkig mit einem zweiten Gelenkglied verbunden und sind das erste und zweite Gelenkglied ihrerseits durch ein Gelenk miteinander verbunden. Dadurch entsteht eine Kniehebelpresse mit wenigstens einem Kniehebelgelenk. Das Getriebe nutzt den Kniehebeleffekt, wonach die durch das Verbindungselement eingeleitete Antriebskraft im Bereich der fast ganz durchgestreckten ersten und zweiten Gelenkglieder stark verstärkt werden kann. Die ausgehend von der Offenposition vorhergehende Bewegung kann mit geringer Kraft erfolgen.

Mit Vorteil ist an dem Gelenk, welches das erste und zweite Gelenkglied verbindet, ein drittes Gelenkglied angelenkt. Das dritte Gelenk kann daher das Beugen und Strecken des Kniehebelgelenks steuern.

In einem weiteren besonders bevorzugten Ausführungsbeispiel ist das dritte Gelenkglied dazu ausgebildet, die Bewegung des Verbindungselements auf das erste und zweite Gelenkglied zu übertragen und ist zu diesem Zweck gelenkig mit dem Verbindungselement verbunden. Durch diese Hebelanordnung kann das dritte Gelenkglied dazu dienen, die auf das Verbindungselement wirkende Antriebskraft in das Kniegelenk einzuleiten.

Zweckmässigerweise ist das Verbindungselement ein in dem Gehäuse verschiebbarer Kolben umfassend einen Kolbenboden und ein Kolbenhemd. Der Kolben kann rotationssymmetrisch sein, wodurch er für Einstellungszwecke in dem als Zylinder ausgeführten Gehäuse verdrehbar ist. Denkbar ist es auch, dass das Verbindungselement durch eine anderwärtige Linearführung in dem Gehäuse geführt ist.

Zweckmässigerweise ist in dem Kolben ein Hohlraum vorgesehen, welcher gegenüber dem Kolbenboden offen ist und in welchem das Getriebe aufgenommen ist. Der Hohlraum ermöglicht es, dass kein zusätzlicher Platz in dem Gehäuse für das Getriebe vorgesehen werden muss. So kann der Kolben in seiner Verschlussstellung an dem Gehäuseboden aufsitzen, obwohl der Kniehebel durchgestreckt ist.

Mit Vorteil durchdringt die Haltestange den Kolbenboden. Durch dieses technische Merkmal kann die Haltestange mit dem feststehenden Gehäuse verbunden werden. Es versteht sich, dass die Haltestange gegenüber dem Kolben angedichtet sein muss.

Als vorteilhaft erweist es sich, wenn die Position der Haltestange in Bewegungsrichtung der Hubstange verstellbar ist. Die Verstellbarkeit wird zur Feinjustierung des erfindungsgemässen Betätigungsorgans benutzt. Dadurch kann die Kraft, welche in der Verschlussposition von dem freien Ende der Hubstange abgenommen werden kann, genau eingestellt werden.

In vorteilhafter Weise ist die Verstellbarkeit der Haltestange dadurch realisiert, dass diese in das Gehäuse einschraubbar ist. Dadurch ist eine sehr feine Kraftdosierung möglich, welche in einfacher Weise durch Drehen einer Schraube realisiert ist.

In einer weiteren bevorzugten Ausführungsform steht die auf die Hubstange wirkende Kraft in Abhängigkeit zur Länge des dritten Gelenkglieds und zur Winkelstellung der Gelenkglieder zueinander. Durch die Länge der dritten Gelenkglieder lässt sich die Grösse der von dem ersten Ende der Hubstange ableitbare Kraft einstellen, welche währen dem Strecken des Kniehebels wirkt.

Als vorteilhaft erweist es sich, wenn das das Getriebe die auf das Verbindungselement wirkende Kraft mit einem Faktor von 3 bis 12 und bevorzugt von 5 bis 10 verstärkt. Denkbar sind auch andere Verstärkungsfaktoren, welche durch die Dimensionierung der Gelenkglieder erzielbar sind. Für die Anwendung im Ventilstellbereich sind die beanspruchten Faktoren jedoch zielführend.

In einer weiteren besonders bevorzugten Ausführungsform ist das Getriebe derart ausgeführt, dass es das geschlossene Verschlussteil selbsthemmend verriegeln kann. Je nach Ausführung kann das Getriebe einfach oder zweifach zyklisch sein. Durch dieses Merkmal ist es verunmöglicht, dass das Betätigungsorgan aus der Verschlussposition aufdrückbar ist. Erst das Zurückziehen des Kolbens ermöglicht das Öffnen des Betätigungsorgans.

Zur Vergrösserung des Hubes der Hubstange ist mit Vorteil eine Mehrzahl von in Reihe verbundener zweiten Gelenkgliedern vorgesehen, deren Enden als ineinandergreifende Zahnräder ausgebildet sind. Diese verhindern zuverlässig das Einknicken des Aufbaus aus zweiten Gelenkgliedern in der ausgefahrenen Verschlussposition.

In einer weiteren bevorzugten Ausführungsform ist das Getriebe zwangsgeführt, indem das erste Gelenkglied an dem ersten feststehenden Ende der Haltestange angelenkt ist und eine Antriebsbewegung von dem Verbindungselement durch das dritte Gelenkglied auf das erste und zweite Gelenkglied übertragen ist. Das Getriebe stützt sich an dem ersten Ende der Haltestange und an der Innenseite des Kolbenhemdes ab. Dadurch können sich die an der Hubstange angelenkten zweiten Gelenkglieder nur mehr nach unten in Richtung des Zylinderbodens bewegen. Dadurch drücken sie die Hubstange nach unten aus dem Zylinder hinaus.

Mit Vorteil ist das das Getriebe ziehharmonikaartig ein- und ausfahrbar. Dadurch benötigt es wenig Platz und ist in dem Zylindergehäuse aufnehmbar. Ist der Antrieb des erfindungsgemässen Betätigungsorgans hydraulisch, so werden durch das Hydrauliköl die Gelenke der Gelenkglieder geschmiert.

Als zweckmässig erweist es sich, wenn das Betätigungsorgan einen Überlastschutz umfasst, indem die Haltestange vorgespannt ist und bei einer definierten Kraft relativ zum Gehäuse verschiebbar ist. Dadurch ist es ermöglicht, dass eine definierte Kraft auf die Dichtung eines Ventils wirkt. Wenn die Hebelkraft der Mechanik zu gross ist und die Dichtung zerstören würde, wird zuvor der Überlastschutz aktiviert. Der Überlastschutz bewirkt, dass keine Überlastung der Bauteile auftritt, welche zu Schäden des Betätigungsorgans führen können. Der Überlastschutz ist aber auch für Steuer- und Regelungsaufgaben einsetzbar. Beispielsweise ist es denkbar, dass ein von dem Betätigungsorgan betätigtes Ventil ab einem bestimmten Betriebsdruck automatisch öffnet.

Ein weiterer Aspekt der Erfindung betrifft die Anwendung des erfindungsgemässen Betätigungsorgans in einer Press-, Stanz-, Punktschweiss- oder Nietanlage. Der einfache Aufbau und die sehr hohe ableitbare Kraft prädestinieren das Betätigungsorgan für alle Vorrichtungen, bei welchen eine hohe translatorische Kraft benötigt ist.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine Schnittdarstellung eines federschliessenden Linearantriebes gemäss dem Stand der Technik;
- Figur 2:: eine erste Ausführungsform des erfindungsgemässen Betätigungsorgans in Schnittdarstellung und in einer Offenposition;
- Figur 3:: die Ausführungsform aus Figur 2 in einer Verschlussposition;
- Figur 4:: eine zweite Ausführungsform des erfindungsgemässen Betätigungsorgans in Schnittdarstellung und in einer Offenposition
- Figur 5:: die Ausführungsform aus Figur 4 in einer Verschlussposition;
- Figur 6:: eine dritte Ausführungsform des erfindungsgemässen Betätigungsorgans in Schnittdarstellung und in einer Offenposition;
- Figur 7:: die Ausführungsform aus Figur 7 in einer Verschlussposition;
- Figur 8:: eine vierte Ausführungsform des erfindungsgemässen Betätigungsorgans in Schnittdarstellung und in einer Offenposition;
- Figur 9:: die Ausführungsform aus Figur 8 in einer Verschlussposition;
- Figur 10:: eine fünfte Ausführungsform des erfindungsgemässen Betätigungsorgans in Schnittdarstellung und in einer Offenposition;
- Figur 11:: die Ausführungsform aus Figur 10 in einer Verschlussposition;
- Figur 12: eine sechste Ausführungsform des erfindungsgemässen Betätigungsorgans in Schnittdarstellung und in einer Offenposition;
- Figur 13:: die Ausführungsform aus Figur 12 in einer Verschlussposition und
- Figur 14:: ein Kraft-Weg Diagramm eines Linearantriebs gemäss dem Stand der Technik (Linie I) im Vergleich mit einem Kraft-Weg Diagramm eines erfindungsgemässen Betätigungsorgans (Linie II).

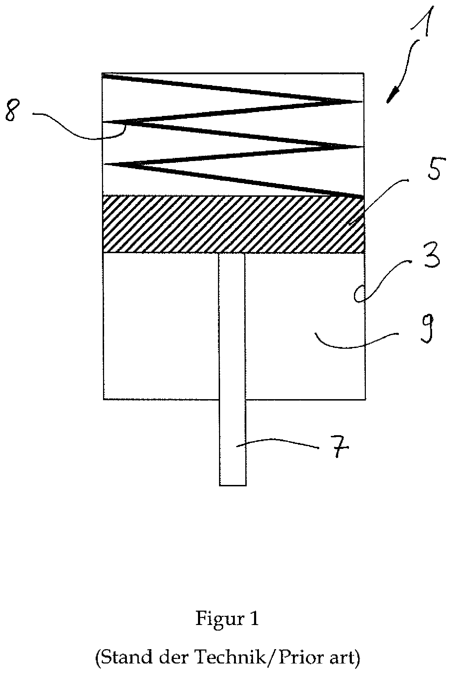

In der Figur 1 ist ein Betätigungsorgan gemäss dem Stand der Technik gezeigt. Dabei handelt es sich um einen Linearantrieb 1, welcher federschliessend ist. Der Linearantrieb 1 umfasst ein Gehäuse 3, in welchem ein Kolben 5 linear bewegbar ist. Eine Stellstange 7 ist an dem Kolben 5 befestigt und kann eine translatorische Bewegung ausführen, beispielsweise zum Heben und Senken eines Ventiltellers. Der Kolben 5 ist durch eine Feder 8 aus einer Offenposition in eine Verschlussposition überführbar. Das Überführen von der Verschlussposition in die Offenposition kann beispielsweise durch Beaufschlagen der unteren Gehäusekammer 9 mit einem hydraulischen oder einem pneumatischen Medium erfolgen.

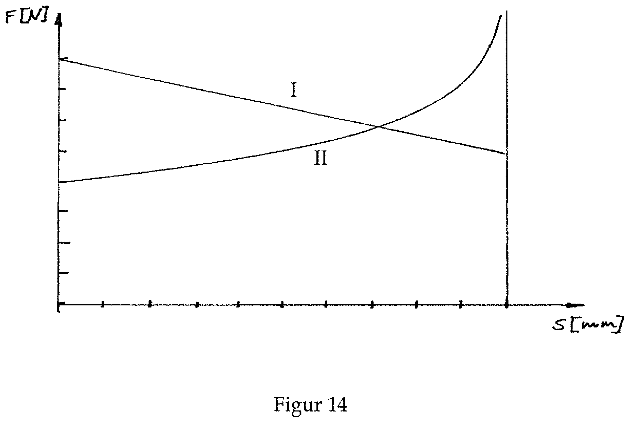

Dient der Linearantrieb 1 dem Öffnen und Schliessen eines Ventils, so muss die Feder 8 verhältnismässig stark ausgeführt sein. Die Federkennlinie I der Feder 8 in Figur 14 ist linear abnehmend. Deshalb ist die Federkraft in der Verschlussposition geringer als in der Offenposition. In der Verschlussposition wird jedoch eine erhöhte Kraft benötigt, damit das Ventil nicht aufgedrückt werden kann. Um diese Kraft bereitstellen zu können, muss eine verhältnismässig starke Feder 8 zum Einsatz kommen. In der Offenposition ist die Kraft der Feder 8 aber gemäss der linearen Federkennlinie I höher, wird in der Offenposition jedoch gar nicht benötigt. Eine Feder 8, welche den beschriebenen Anforderungen entspricht, benötigt durch ihre Stärke bedingt viel Platz. Zudem muss die Kraft des Antriebs zum Überführen des Kolbens 5 in die Offenposition kontinuierlich steigen, um die Feder komprimieren zu können und muss daher zum Aufdrücken des Kolbens überdimensioniert sein.

Das erfindungsgemässe Betätigungsorgan, welches gesamthaft mit dem Bezugszeichen 11 bezeichnet ist, überwindet oben beschriebene Nachteile. Einige Bauteile sind im Vergleich zum Stand der Technik ähnlich. So umfasst das Betätigungsorgan 11 auch ein Gehäuse 13 und einen darin translatorische geführten Kolben 15. Das Gehäuse 13 ist bevorzugt ein Zylinder. Die Feder 17 besitzt eine um wenigstens einen Faktor 5 bis 10 geringere Stellkraft als eine beim Stand der Technik eingesetzte Feder 8. Dementsprechend kleiner und schwächer kann die Feder 17 ausgeführt sein. Anstatt der Stellstange 7 sind bei dem Betätigungsorgan 11 eine Hubstange 19 und eine Haltestange 21 vorgesehen.

Die Haltestange 21 ist im Wesentlichen fest mit dem Gehäuse 13 verbunden. Um das Gehäuse 13 zu erreichen, durchdringt die Haltestange 21 den Kolben bevorzugt im Bereich des Kolbenbodens 23. Der Kolben 15 lässt sich daher entlang der Haltestange 21 verschieben. Es versteht sich, dass der Durchgang am Kolbenboden 23 gegenüber der Haltestange 21 abgedichtet sein muss. Dies bevorzugt mit einem ersten Dichtring 25.

Um die Federkraft, welche auf den Kolben wirkt, zu verstärken, ist ein Getriebe 27 vorgesehen. Das Getriebe 27 ist mit der Haltestange 21, der Hubstange 19 und dem Kolben 15 gelenkig verbunden. Das Getriebe 27 ermöglicht es, dass die auf den Kolben 15 wirkende Federkraft verstärkt auf die Hubstange 19 übertragen ist. In dem Kolben 15 ist ein Hohlraum 29 vorgesehen, welcher nach unten offen ist. In dem Hohlraum 29 findet das Getriebe 27 Platz.

Sowohl die Hubstange 19 als auch die Haltestange 21 weisen ein erstes und zweites Ende 31a,31b,33a,33b auf. Das erste Ende 31a dient der Übertragung der durch das Getriebe 27 verstärkten Stellkraft auf ein Druckelement, beispielsweise einen Ventilteller, eine Stanze oder einen Nietstempel oder eine Elektrode eines Punktschweissgeräts. Dabei durchdringt die Hubstange 19 den Gehäuseboden 35 und ist gegenüber diesem mit einem zweiten Dichtring 37 abgedichtet. Das zweite Ende 33b ist an dem Gehäuse 13 befestigt.

Das Getriebe 27 ist wenigstens aus einem ersten, zweiten und dritten Gelenkglied 39,41,43 aufgebaut, welche Gelenkglieder an einem ihrer Enden gelenkig miteinander verbunden sind. In den Ausführungsbeispielen sind jeweils vier erste, zweite und dritte Gelenkglieder 39,41,43 paarweise angeordnet (also gesamt 12 Gelenkglieder), um eine maximale Stabilität zu gewährleisten. Das freie Ende (nicht mit anderen Gelenkgliedern verbunden) des ersten Gelenkgliedes 39 ist gelenkig mit dem ersten Ende 33a verbunden. Das freie Ende des zweiten Gelenkgliedes 41 ist gelenkig mit dem zweiten Ende 31b verbunden und das freie Ende des dritten Gelenkgliedes 43 ist an der Innenseite des Kolbenhemdes 45 angelenkt.

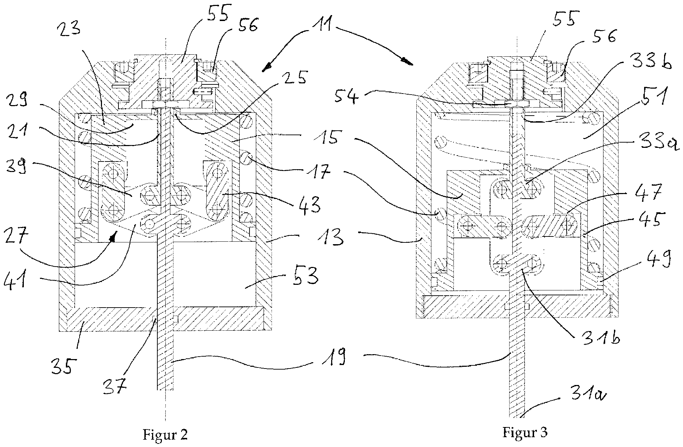

Die Funktionsweise des erfindungsgemässen Betätigungsorgans 11 wird nun anhand der Figuren 2 und 3 erläutert: Wird der Kolben 15 durch die Federkraft 17 von der Offenposition in die Verschlussposition translatorisch verschoben, so sind die Gelenkglieder 39,41,43 durch ihre spezielle Anordnung einerseits untereinander und andererseits an der Haltestange 21, der Hubstange 19 und dem Kolbenhemd 45, zwangsgeführt. Als festsehender Angelpunkt wirkt das erste Ende 33a. Die dritten Gelenkglieder 43 drücken die ersten und zweiten Gelenkglieder 39,41 zusammen, sodass das erste Ende 33a und das zweite Ende 31b durch das Getriebe auseinandergespreizt werden. Die Federkraft wird dabei von den als Hebelarme wirkenden Gelenkglieder 39,41,43 verstärkt und vervielfacht. Dadurch, dass die ersten Gelenkglieder 39 indirekt von dem Kolben 15 nach unten gezogen werden, werden die dritten Gelenkglieder 43 nach innengezogen. Dies bewirkt wiederum, dass die zweiten Gelenkglieder nach unten gedrückt werden. Das erste und zweite Gelenkglied 39,41 wirken daher wie ein Kniegelenkhebel. Zusammen mit dem dritten Gelenkglied 43, welches die Antriebskraft aus dem Kolben 15 in den Kniehebel einleitet, ist eine Kniehebelpresse realisiert.

In der Verschlussposition sind die ersten und zweiten Gelenkglieder 39,41 vertikal ausgerichtet (Figur 3) und bilden dadurch eine erste mechanische Verriegelung der Hubstange in dieser Position. Eine zweite mechanische Verriegelung ist durch die horizontale Stellung der dritten Gelenkglieder 43 gebildet. Das Getriebe 27 ist demzufolge wenigstens einfach selbsthemmend. Ein Aufdrücken durch eine zentrale Kraft auf das erste Ende 31 ist unmöglich. Die Kraft-Weg Linie des Betätigungsorgans 11 ist durch die Linie II in Figur 14 veranschaulicht.

Erst eine von unten auf den Kolbenboden 23 wirkende Kraft (bevorzugt eine hydraulische oder pneumatische Kraft) bewirkt, dass die dritten Gelenkglieder 43 nach oben gezogen werden, wodurch die ersten und zweiten Gelenkglieder 39,41 auseinandergezogen werden. Die Innenseite des Kolbenhemdes 45 ist in einer Stufe 47 abgesetzt. Dadurch können die dritten Gelenkglieder 43 an der Stufe anschlagen, wenn das erste Ende 31 a belastet wird. Die Stufe 47 verhindert daher ein Einknicken der dritten Gelenkglieder 43. Der Kolben ist mit einem dritten Dichtring 49 versehen, wodurch der Federraum 51 gegenüber dem Druckraum 53 abgedichtet ist.

Die Gelenkglieder 39,41,43 sind derart in ihren Längen bemasst, dass sie in der Verschlussstellung ein Kreuz bilden und vollständig in dem Hohlraum 29 aufgenommen sind.

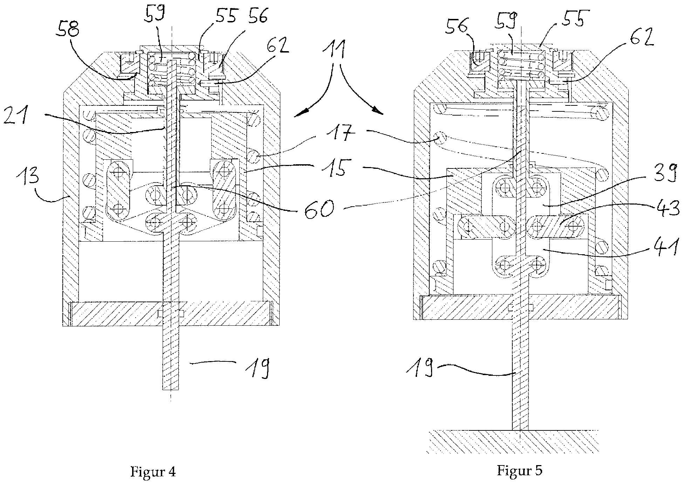

Die Feinjustierung des Betätigungsorgans 11 kann dadurch erfolgen, dass das zweite Ende 33b in das Gehäuse 13 eingeschraubt ist. Zur raschen und einfachen Einstellung der Länge der Haltestange 21 ist ein Stellzapfen 55 mit einem Innengewinde und einem Aussengewinde am Kopf des Gehäuses 13 vorgesehen. Je tiefer der Stellzapfen 55 in den Gehäusekopf eindringt, umso weiter ragt die Hubstange 19 aus dem Gehäuse 13 heraus. Die Eindringtiefe des Stellzapfens 55 kann von aussen durch Verdrehen einer Verstellmutter 56 eingestellt werden. Die Funktion der Feinjustierung zur Einstellung der Länge der Haltestange 21 wird bei der Beschreibung der Figuren 4 und 5 detailliert beschrieben. Zur Verbindung der Haltestange 21 mit dem Stellzapfen 55 ist das zweite Ende 33b der Haltestange 21 in den Stellzapfen eingeschraubt. Die Schraubverbindung ist durch eine Haltemutter 54 fixiert.

In den Figuren 4 und 5 ist das Betätigungsorgan 11 mit mehreren zusätzlichen Merkmalen ausgestattet. Zusätzlich zu einer bevorzugten Form der Feinjustierung ist das Betätigungsorgan 11 mit einem Überlastschutz ausgerüstet. Dazu ist in dem Stellzapfen 47 eine Druckfeder 59 positioniert, an welche das zweite Ende 33b anschliesst. Durch Verstellung des Stellzapfens 55 in Längsrichtung der Haltestange 21 lässt sich die Vorspannung der Druckfeder 59 einstellen. So lässt sich die Hubstange 19 auf eine bestimmte Endkraft einstellen mit der sie im ausgefahrenen Zustand auf das Verschlussteil einer Armatur wirkt. Ist die Gegenkraft auf das Verschlussteil grösser als die Federkraft der Druckfeder 59 so wird der Überlastschutz aktiviert, indem die Druckfeder komprimiert wird. Das Ansprechen des Überlastschutzes ist in Figur 5 dargestellt.

Der Verstellzapfen 55 ist relativ zum Gehäuse 13 in Richtung der Längsachse der Haltestange 21 verstellbar. Die Verstellbarkeit kann durch eine Verstellmutter 56 realisiert sein. Die Verstellmutter 56 liegt auf einem Absatz 58 auf und die Verstellmutter 56 ist relativ zum Verstellzapfen 55 frei drehbar. Die Verstellmutter weist ein Außengewinde auf, welches mit einem am Kopf des Gehäuses 13 vorgesehenen Innengewinde zusammenwirkt. Durch Verdrehen der Verstellmutter 56 kann die Position des Verstellzapfens 55 relativ zum Gehäuse 13 verändert werden, ohne dass der Verstellzapfen 55 verdreht werden muss. Das Gewinde ermöglicht eine fein einstellbare Höhenverstellung des Verstellzapfens 55 relativ zum Gewinde. Als Verdrehsicherung für den Verstellzapfen 55 ist ein Zapfen 62 an dem Verstellzapfen 55 befestigt, welcher sich an dem Gehäuse abstützt.

Die in den Figuren 4 und 5 dargestellte Form der Einstellbarkeit mittels Verstellzapfen 55 und Verstellmutter 56 funktioniert selbstverständlich auch wenn kein Überlastschutz vorgesehen ist. Dann ist der Verstellzapfen 55 fest mit der Haltestange 21 verbunden. Durch Verdrehen der Verstellmutter 56 lässt sich die Position der Haltstange 21 zu dem Gehäuse 13 verstellen. Die Eindringtiefe der Haltstange 21 in das Gehäuse 13 ist daher von aussen einstellbar. Dies hat den grossen Vorteil, dass beispielsweise ein Ventilgehäuse nicht zerlegt werden muss, um den Anpressdruck des Ventiltellers zu verändern, da die Länge der Haltestange von aussen über die Verstellmutter 56 verändert werden kann. Die Einstellbarkeit der Haltestange 21 bzw. der Hubstange 19 ermöglicht es, dass jeder Punkt auf dem Kraft-Weg-Diagramm (Figur 14) als Verriegelungs-Punkt eingestellt werden kann.

Ein weiteres Merkmal der Erfindung ist ebenfalls in den Figuren 4 und 5 in Gestalt eines sich selbst stützendes Getriebes 27 offenbart. Die Haltestange ist als ein Halterohr 21 ausgeführt. Die Hubstange 19 besitzt eine Verlängerung 60, welche in jeder Position der Hubstange 19 in das Halterohr 21 ragt. Die Hubstange 19 ist linear in dem Halterohr 21 geführt und benötigt daher keine zusätzliche Führung in dem Gehäuse 13. Ein Kippen der Hubstange 19 ist durch diese sich selbst stützende Lagerung platzsparend verhindert.

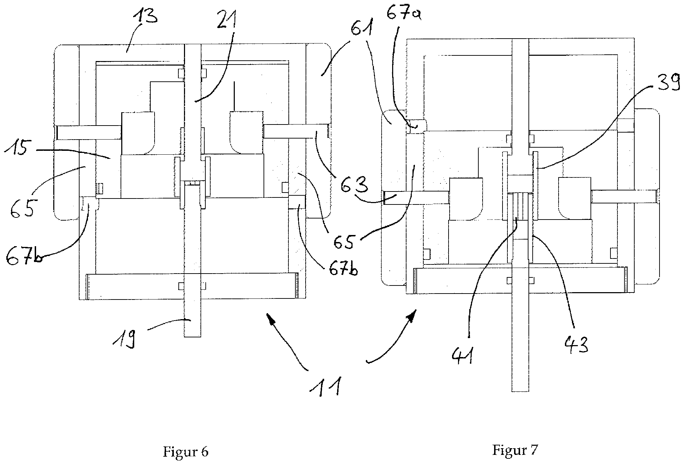

In den Figuren 6 und 7 ist eine Ausführungsform des Betätigungsorgans gezeigt, bei welcher der Kolben 15 manuell bedienbar ist. Dazu ist eine Schiebehülse 61 vorgesehen, welche an der Aussenseite des Gehäuses bzw. des Zylinders 13 verschiebbar ist. Mittels Querstangen 63, welche durch das Gehäuse 13 greifen, lässt sich der Kolben 15 zwischen der Offenposition und der Verschlussposition verschieben. An dem Gehäuse 13 sind zwei vertikale Kulissenführungen 65 vorgesehen, in welchen die Querstangen 63 geführt sind. Die Kulissenführungen 65 haben an ihren Enden horizontale Fortsätze 67a,67b. Wenn sich der Kolben 15 in der Offen- oder der Verschlussposition befindet, so können die Querstangen 63 durch Verdrehen der Schiebehülse 61 in den horizontalen Fortsätzen 67a,67b einrasten. Dadurch lässt sich der Kolben 15 in seinen Endpositionen mechanisch verriegeln. In den Figuren 6 und 7 ist keine Feder dargestellt, wodurch das Verschieben der Verschiebehülse rein manuelle erfolgen muss. Denkbar ist aber auch, dass eine Feder zur Unterstützung der Schiebekräfte in das Gehäuse 13 eingebaut ist.

Aus Figur 7 ist eine weitere mögliche Anordnung der ersten, zweiten und dritten Gelenkglieder 39,41,43 gezeigt. Zu innerst sind die dritten Gelenkglieder 43 angeordnet, in der Mitte die zweiten Kettenglieder 41 und zu äusserst die ersten Kettenglieder 39.

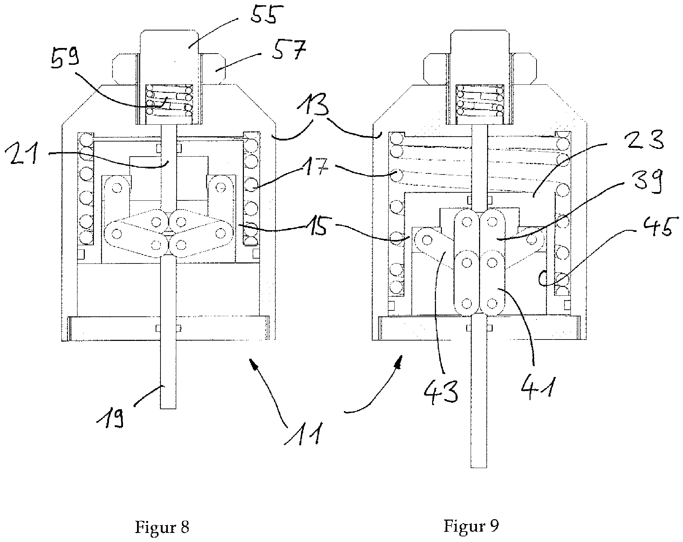

Das Ausführungsbeispiel gemäss den Figuren 8 und 9 zeigt, dass die dritten Gelenkglieder 43 unterschiedliche Längen aufweisen können. Wie in Figur 9 gezeigt, können die dritten Gelenkglieder 43 länger sein, als in den zuvor beschriebenen Ausführungsbeispielen. Da die dritten Gelenkglieder 43 als Hebel wirken, kann durch ihre Längenveränderung die Kurve II verändert werden. Je nach Anwendungsfall kann der Kraftverlauf der auf die Hubstange 19 wirkenden Kraft verändert werden. Denkbar ist es auch, dass die Anlenkpunkte an den Gelenkgliedern 39,41,43 verstellbar sind oder mehrere Anlenkpunkte an den Gelenkgliedern 39,41,43 zur Auswahl stehen. Durch die Veränderung der effektiven Hebellänge ist die Kurve II ebenfalls veränderbar.

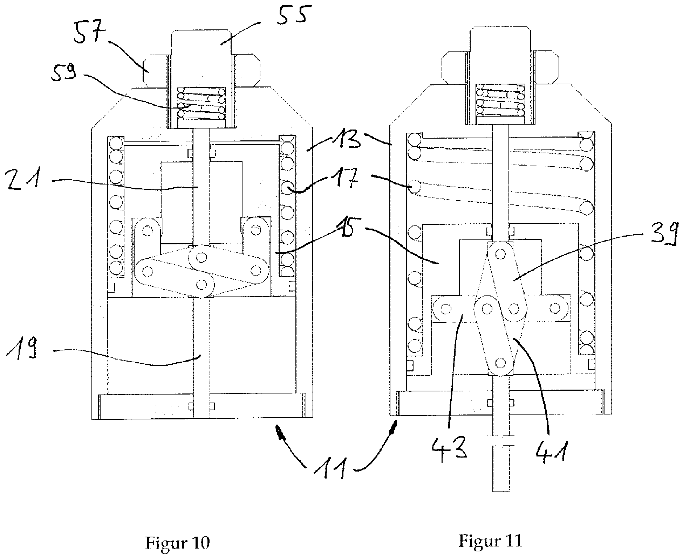

Das Ausführungsbeispiel gemäss den Figuren 10 und 11 zeigt, dass sich die an den Enden 31b und 33a angelenkten Enden der ersten und zweiten Gelenkglieder 39,41 auch überlappen können. Dies führt zu einem einfacheren Aufbau des Getriebes 27, da an den Enden 31b und 33a nur eine Gelenkachse benötigt wird. In der Verschlussstellung ist das Betätigungsorgan jedoch nur einfach zyklisch selbsthemmend.

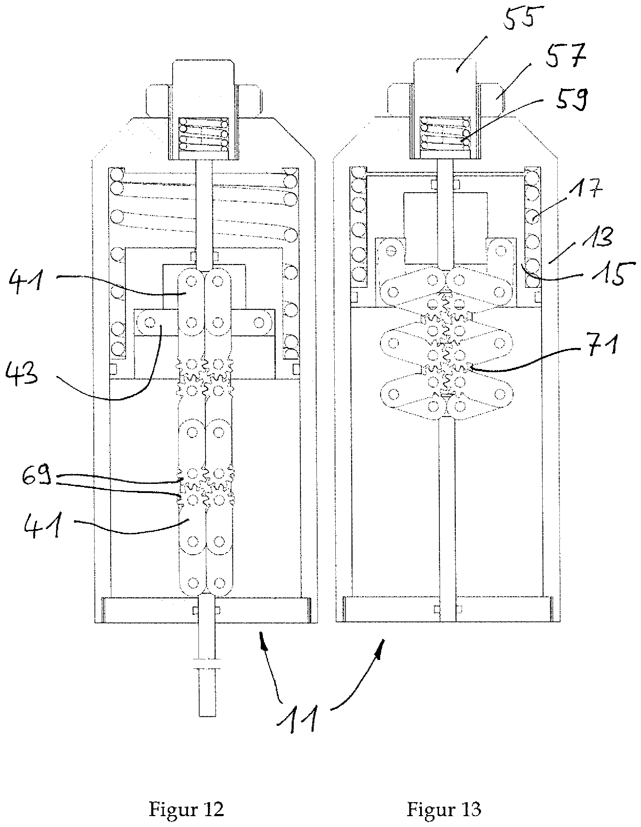

Das Ausführungsbeispiel gemäss den Figuren 12 und 13 ermöglicht es, den Hub der Hubstange 19 zu vergrössern. Dazu sind mehrere Paare von zweiten Gelenkgliedern 41 gelenkig miteinander verbunden. Damit diese bei einem von aussen auf die Schubstange 19 wirkenden Druck nicht einknicken, ist jeweils ein Ende der zweiten Gelenkglieder 41 als Zahnrad 69 ausgebildet. Um mit einem Zahnrad 69 des nächstliegenden zweiten Gelenkgliedes 41 zusammenwirken zu können, sind die Zahnradenden gelenkig an einer Halteplatte 71 befestigt. Durch Vorsehen von mehreren Paaren von zweiten Gelenkgliedern 41 mit jeweils einem Zahnradende sind theoretisch beliebig lange Hübe erzielbar. Die zweiten Gelenkglieder 41 sind ziehharmonikaartig ein- und ausfahrbar.

Das erfindungsgemässe Betätigungsorgan 11 ermöglicht durch Vorsehen des Getriebes 27 eine mechanisch einfache und effiziente Verstärkung der Hubkraft, welche auf die Hubstange 19 wirkt. Zusätzlich lässt sich das Getriebe 27 einfach oder zweifach zyklisch selbsthemmend ausführen, wodurch es verunmöglicht ist, dass die Hubstange 19 in der Verschlussposition durch eine äussere Kraft in das Gehäuse 13 gedrückt wird. Das Getriebe 27 in Gestalt eines Kniehebels ermöglicht es, dass im Vergleich zum Stand der Technik, der Antrieb nicht überdimensioniert sein muss, um einen ausreichenden Anpressdruck des Verschlussteils zu erzielen.

### Legende:

- 1: Linearantrieb
- 3: Gehäuse
- 5: Kolben
- 7: Stellstange
- 8: Feder
- 9: Untere Gehäusekammer
- 11: Betätigungsorgan
- 13: Gehäuse
- 15: Kolben
- 17: Feder
- 19: Hubstange
- 21: Haltestange, Halterohr
- 23: Kolbenboden
- 25: Erster Dichtring
- 27: Getriebe
- 29: Hohlraum
- 31a,31b: Erstes und zweites Ende der Hubstange
- 33a,33b: Erstes und zweites Ende der Haltestange
- 35: Gehäuseboden
- 37: Zweiter Dichtring
- 39: Erstes Gelenkglied
- 41: Zweites Gelenkglied
- 43: Drittes Gelenkglied
- 45: Kolbenhemd
- 47: Stufe im Kolbenhemd
- 49: Dritter Dichtring
- 51: Federraum
- 53: Druckraum
- 54: Haltemutter
- 55: Stellzapfen
- 56: Verstellmutter
- 57: Überwurfmutter
- 58: Absatz an der Verstellmutter
- 59: Druckfeder, Überlastschutz
- 60: Verlängerung der Hubstange
- 61: Schiebehülse
- 62: Zapfen als Verdrehsicherung
- 63: Querstangen
- 65: Kulissenführung
- 67a,67b: Horizontale Fortsätze
- 69: Zahnrad
- 71: Halteplatte

## Patentansprüche

1. Betätigungsorgan, zum Öffnen und Schliessen eines Verschlussteils einer Armatur, umfassend
- ein Gehäuse (3,13),
- eine Stellstange (7), an der einerends das Verschlussteil befestigbar ist und
- ein relativ zum Gehäuse (3,13) bewegliches Verbindungselement (5,15) zur Verbindung der Stellstange (7) mit einem mechanischen, manuellen, hydraulischen, elektrischen und/oder pneumatischen Antrieb zum Heben und Senken der Stellstange (7),
wobei die Stellstange (7) in eine Haltestange (21) und eine Hubstange (19) unterteilt ist,
- die Haltestange (21) im Wesentlichen unbeweglich an dem Gehäuse (13) befestigt ist,
- die Haltestange (21), die Hubstange (19) und das Verbindungselement (15) über ein Getriebe (27) verbunden sind,
- die Hubstange (19) über das Getriebe (27) durch den Antrieb betätigbar ist und
- die Position der Haltestange (21) in Bewegungsrichtung der Hubstange (19) verstellbar ist,
**dadurch gekennzeichnet,**
**dass** die Hubstange (19) an der Haltestange (21) geführt ist.

2. Betätigungsorgan nach Anspruch 1, **dadurch gekennzeichnet, dass** die Position der Haltestange (21) relativ zu dem Gehäuse (13) ausserhalb des Gehäuses (13) einstellbar ist.

3. Betätigungsorgan nach Anspruch 1 oder 2, **dadurch gekennzeichnet, dass** die Haltestange (21) an einem Stellzapfen (55) befestigt ist, welcher relativ zu dem Gehäuse (13) in Längsachsenrichtung der Haltestange (21) verstellbar ist.

4. Betätigungsorgan nach einem der vorangehenden Ansprüche, **dadurch gekennzeichnet, dass** die Haltestange (21) als ein Halterohr (21) ausgebildet ist, in welchem die Hubstange (19) geführt ist.

5. Betätigungsorgan nach einem der vorangehenden Ansprüche, **dadurch gekennzeichnet, dass** das Getriebe (27) aus einer Vielzahl von Gelenkgliedern (39,41,43) aufgebaut ist.

6. Betätigungsorgan nach einem der vorangehenden Ansprüche, **dadurch gekennzeichnet, dass** sowohl die Haltestange (21) als auch die Hubstange (19) ein erstes und zweites Ende (31,a,31b,33a,33b) aufweisen und die Haltestange (21) an ihrem zweiten Ende (33b) an dem Gehäuse (13) befestigt ist.

7. Betätigungsorgan nach Anspruch 6, **dadurch gekennzeichnet, dass** das erste Ende (33a) der Haltestange (21) gelenkig mit einem ersten Gelenkglied (39) verbunden ist, das zweite Ende (31b) der Hubstange (19) gelenkig mit einem zweiten Gelenkglied (41) verbunden ist und das erste und zweite Gelenkglied (39,41) ihrerseits durch ein Gelenk miteinander verbunden sind, wodurch ein Kniehebel realisiert ist.

8. Betätigungsorgan nach Anspruch 7, **dadurch gekennzeichnet, dass** an dem Gelenk, welches das erste und zweite Gelenkglied (39,41) verbindet, ein drittes Gelenkglied (43) angelenkt ist.

9. Betätigungsorgan nach Anspruch 8 **dadurch gekennzeichnet, dass** die auf die Hubstange (19) wirkende Kraft in Abhängigkeit zur Länge des dritten Gelenkglieds (43) und zur Winkelstellung der Gelenkglieder zueinander steht.

10. Betätigungsorgan nach einem der vorangehenden Ansprüche, **dadurch gekennzeichnet, dass** das Getriebe (27) die auf das Verbindungselement (15) wirkende Kraft mit einem Faktor von 3 bis 12 und bevorzugt von 5 bis 10 verstärkt.

11. Betätigungsorgan nach einem der vorangehenden Ansprüche, **dadurch gekennzeichnet, dass** das Getriebe (27) derart ausgeführt ist, dass es das geschlossene Verschlussteil selbsthemmend verriegeln kann.

12. Betätigungsorgan nach einem der Ansprüche 7 bis 11, **dadurch gekennzeichnet, dass** zur Vergrösserung des Hubes der Hubstange (19) eine Mehrzahl von in Reihe verbundener zweiten Gelenkgliedern (41) vorgesehen ist, deren Enden als ineinandergreifende Zahnräder (69) ausgebildet sind.

13. Betätigungsorgan nach einem der vorangehenden Ansprüche, **dadurch gekennzeichnet, dass** das Betätigungsorgan (11) einen Überlastschutz (59) umfasst, indem die Haltestange (21) vorgespannt ist und bei einer definierten Kraft relativ zum Gehäuse (13) verschiebbar ist.

14. Verwendung des Betätigungsorgans (11) gemäss einem der vorangehenden Ansprüche in einer Press-, Stanz-, Punktschweiss- oder Nietanlage.

## Claims

1. Actuating element for opening and closing a closure part of a fitting comprising:
- a housing (3, 13),
- an adjusting rod (7) on which the closure part can be fixed at one end and
- a connecting element (5, 15) movable relative to the housing (3, 13) for connecting the adjusting rod (7) with a mechanic, manual, hydraulic, electric and/or pneumatic drive for lifting and lowering the adjusting rod (7),
whereby the adjusting rod (7) is divided into a holding rod (21) and a lifting rod (19),
- the holding rod (21) is fixed substantially unmovable on the housing (13),
- the holding rod (21), the lifting rod (19) and the connecting element (15) are connected by a gear (27),
- the lifting rod (19) can be actuated by the drive via the gear (27) and
- the position of the holding rod (21) can be displaced in the direction of motion of the lifting rod (19),
**characterized in**
**that** the lifting rod (19) is guided on the holding rod (21).

2. Actuating element according to claim 1, **characterized in that** the position of the holding rod (21) is adjustable relative to the housing (13) outside the housing (13).

3. Actuating element according to claim 1 or 2, **characterized in that** the holding rod (21) is fixed on an adjusting pin (55) that can be displaced relative to the housing (13) in the direction of the longitudinal axis of the holding rod (21).

4. Actuating element according to one of the preceding claims, **characterized in that** the holding rod (21) is configured as a holding tube (21) in which the lifting rod (19) is guided.

5. Actuating element according to one of the preceding claims, **characterized in that** the gear (27) is built from a multitude of hinged elements (39, 41, 43).

6. Actuating element according to one of the preceding claims, **characterized in that** the holding rod (21) as well as the lifting rod (19) has a first and a second end (31a, 31b, 33a, 33b) and the holding rod (21) is fixed at its second end (33b) on the housing (13).

7. Actuating element according to claim 6, **characterized in that** the first end (33a) of the holding rod (21) is articulately connected with a first articulated element (39), the second end (31b) of the lifting rod (19) is articulately connected with a second articulated element (41) and the first and the second articulated element (39, 41) are for their part connected with each other by a hinge so that a knee lever is formed.

8. Actuating element according to claim 7, **characterized in that** a third articulated element (43) is articulated on the hinge that connects the first and the second articulated element (39, 41).

9. Actuating element according to claim 8, **characterized in that** the force acting onto the lifting rod (19) depends on the length of the third articulated element (43) and on the angular position of the articulated elements to one another.

10. Actuating element according to one of the preceding claims, **characterized in that** the gear (27) amplifies the force acting onto the connecting element (15) with a factor of 3 to 12 and preferably of 5 to 10.

11. Actuating element according to one of the preceding claims, **characterized in that** the gear (27) is configured in such a manner that it can lock self-locking the closed closure part.

12. Actuating element according to one of the claims 7 to 11, **characterized in that** a multitude of second articulated elements (41) connected in series is provided for increasing the lift of the lifting rod (19), articulated elements the ends of which are configured as meshing toothed wheels (69).

13. Actuating element according to one of the preceding claims, **characterized in that** the actuating element (11) comprises an overload protection (59), the holding rod (21) being preloaded and being displaceable relative to the housing (13) for a defined force.

14. Use of the actuating element (11) according to one of the preceding claims in a pressing installation, a punching plant, a spot welding or a riveting installation.

## Revendications

1. Organe d'actionnement pour ouvrir et fermer une pièce de fermeture d'une armature comprenant :
- un boîtier (3, 13),
- une tige de réglage (7) à laquelle la pièce de fermeture peut être fixée à une extrémité et
- un élément de liaison (5, 15) mobile par rapport au boîtier (3, 13) pour relier la tige de réglage (7) à un entraînement mécanique, manuel, hydraulique, électrique et/ou pneumatique pour lever et abaisser la tige de réglage (7), cependant que la tige de réglage (7) est divisée en une tige de maintien (21) et une tige de levage (19),
- la tige de maintien (21) est fixée sensiblement immobile sur le boîtier (13),
- la tige de maintien (21), la tige de levage (19) et l'élément de liaison (15) sont reliés par un engrenage (27),
- la tige de levage (19) peut être actionnée par l'entraînement par l'intermédiaire de l'engrenage (27) et
- la position de la tige de maintien (21) peut être déplacée dans le sens de déplacement de la tige de levage (19),
**caractérisé en ce**
**que** la tige de levage (19) est guidée sur la tige de maintien (21).

2. Organe d'actionnement selon la revendication 1, **caractérisé en ce que** la position de la tige de maintien (21) est réglable par rapport au boîtier (13) à l'extérieur du boîtier (13).

3. Organe d'actionnement selon la revendication 1 ou 2, **caractérisé en ce que** la tige de maintien (21) est fixée à un tourillon de réglage (55) qui est déplaçable par rapport au boîtier (13) dans le sens de l'axe longitudinal de la tige de maintien (21).

4. Organe d'actionnement selon l'une des revendications précédentes, **caractérisé en ce que** la tige de maintien (21) est configurée comme un tube de retenue (21) dans lequel la tige de levage (19) est guidée.

5. Organe d'actionnement selon l'une des revendications précédentes, **caractérisé en ce que** l'engrenage (27) est constitué par une multitude d'éléments articulés (39, 41, 43).

6. Organe d'actionnement selon l'une des revendications précédentes, **caractérisé en ce que** la tige de maintien (21) aussi bien que la tige de levage (19) présentent une première et une seconde extrémité (31a, 31b, 33a, 33b) et que la tige de maintien (21) est fixée à sa seconde extrémité (33b) sur le boîtier (13).

7. Organe d'actionnement selon la revendication 6, **caractérisé en ce que** la première extrémité (33a) de la tige de maintien (21) est reliée de manière articulée à un premier élément articulé (39), que la seconde extrémité (31b) de la tige de levage (19) est reliée de manière articulée à un second élément articulé (41) et que le premier et le second élément articulé (39, 41) sont reliés à leur tour l'un à l'autre par une articulation si bien qu'un levier coudé est réalisé.

8. Organe d'actionnement selon la revendication 7, **caractérisé en ce qu'**un troisième élément articulé (43) est articulé sur l'articulation qui relie le premier et le second élément articulé (39, 41).

9. Organe d'actionnement selon la revendication 8, **caractérisé en ce que** la force qui agit sur la tige de levage (19) dépend de la longueur du troisième élément articulé (43) et de la position angulaire des éléments articulés l'un par rapport à l'autre.

10. Organe d'actionnement selon l'une des revendications précédentes, **caractérisé en ce que** l'engrenage (27) renforce la force qui agit sur l'élément de liaison (15) avec un facteur de 3 à 12 et de préférence de 5 à 10.

11. Organe d'actionnement selon l'une des revendications précédentes, **caractérisé en ce que** l'engrenage (27) est réalisé de telle manière qu'il peut verrouiller la pièce de fermeture fermée de manière autobloquante.

12. Organe d'actionnement selon l'une des revendications 7 à 11, **caractérisé en ce qu'**une multitude de seconds éléments articulés (41) reliés en série, dont les extrémités sont configurées comme des roues dentées (69) engrenées les unes dans les autres, est prévue pour augmenter la course de la tige de levage (19).

13. Organe d'actionnement selon l'une des revendications précédentes, **caractérisé en ce que** l'organe d'actionnement (11) comprend une protection contre les surcharges (59), la tige de maintien (21) étant précontrainte et pouvant coulisser par rapport au boîtier (13) pour une force définie.

14. Utilisation de l'organe d'actionnement (11) selon l'une des revendications précédentes dans une installation de pressage, d'estampage, de soudure par points ou de rivetage.
